# EUROPÄISCHE PATENTSCHRIFT

(11) **EP 3 086 916 B1**
(45) Veröffentlichungstag und Bekanntmachung des Hinweises auf die Patenterteilung: **23.10.2019**
(21) Anmeldenummer: 14821161.8
(22) Anmeldetag: 19.12.2014
(51) Int. Cl.: B29C 44/44, B29C 44/60

(54) **VORRICHTUNG UND VERFAHREN ZUR HERSTELLUNG EINES PARTIKELSCHAUMSTOFFTEILS**
DEVICE AND METHOD FOR PRODUCING A PARTICLE FOAM PART
DISPOSITIF ET PROCÉDÉ DE PRODUCTION D'UNE PIÈCE EN MOUSSE PARTICULAIRE

(30) Priorität: 23.12.2013 DE 102013114799
(43) Veröffentlichungstag der Anmeldung: 02.11.2016
(73) Patentinhaber: Kurtz GmbH, 97892 Kreuzwertheim (DE)
(72) Erfinder: REUBER, Norbert, 97851 Bergrothenfels (DE); LEIMEISTER, Bernd, 97836 Bischbrunn (DE)
(74) Vertreter: HGF Europe LLP
(86) Internationale Anmeldenummer: PCT/EP2014/078646
(87) Internationale Veröffentlichungsnummer: WO 2015/097075

(56) Entgegenhaltungen:
- EP-A1- 0 485 714
- EP-A1- 2 671 633
- EP-A2- 0 224 103
- DE-A1- 19 637 349
- JP-A- H0 811 148
- JP-A- S6 268 730
- US-A- 4 685 872
- US-A1- 2012 329 892

## Beschreibung

Die vorliegende Erfindung betrifft eine Vorrichtung und ein Verfahren zur Herstellung eines Partikelschaumstoffteils.

Vorrichtungen zur Herstellung von Partikelschaumstoffteilen sind aus der DE 38 31 600 C1 und dem deutschen Gebrauchsmuster DE 20 2006 009 569 U1 bekannt. Partikelschaumstoffteile werden hergestellt, indem vorgeschäumte Schaumstoffpartikel in einen Formteilinnenraum eines Formwerkzeuges gefüllt und durch Zuführen von heißem Wasserdampf miteinander verschweißt werden. Die Schaumstoffpartikel können mit einem Treibmittel imprägniert sein, das beim Verschweißen ein zusätzliches Aufblähen der Schaumstoffpartikel bewirkt. Die Schaumstoffpartikel bestehen beispielsweise aus expandierbaren Polystyrol EPS, expandierbaren Polyethylen EPE, expandierbaren Polypropylen EPP oder E-Copolylimerisaten.

Aus der DE 196 37 349 A1 geht eine Vorrichtung zum Sintern von schäumbarem Kunststoffmaterial hervor. Als Kunststoffmaterial wird vorgeblähtes Polystyrol verwendet, das aus einem Vorratsbehälter einer Sinterkammer zugeführt wird. Die Vorrichtung zum Herstellen des Kunststoff-teils weist zwei Werkzeugteile auf, die eine Schäum- und Sinterkammer begrenzen. Zusätzlich können Schieber vorgesehen sein, sodass Werkzeugteile mit Hinterschnitt ausgebildet werden können. Die Werkzeugteile und die Schieber weisen Dampfkammern auf. Von den Dampfkammern führt eine Vielzahl kleiner Kanäle in das Innere der Sinterkammern. Jede Dampfkammer ist mit Sensoren bestückt, die mit einer Steuerung verbunden sind. Über die Sensoren werden die im Bereich jeder einzelnen Dampfkammer herrschende Temperatur an der Sinterkammer, der dort herrschende Schäumdruck, sowie der in der Sinterkammer vorliegende Dampfdruck an die Steuerung weitergegeben. Mit der Steuerung wird ein Sollwert für jeweils die Temperatur, den Schäumdruck und den Dampfdruck für jede Dampfkammer individuell vorgegeben.

Aus der DE 196 37 347 A1 geht ein ähnliches Verfahren zum Herstellen eines Gussteiles hervor, wobei zunächst ein Kunststoffteil geschäumt wird.

In der EP 224 103 B1 ist ein adaptives Steuerverfahren zum Schäumen und Sintern von aus vorexpandiertem Kunststoffmaterial ausgebildeten Kunststoffkörpern beschrieben. Die im Sinterprozess erzeugten Kunststoffteile können einer Qualitätsmessung zugeführt werden. Die Qualitätskennwerte sind die Formgenauigkeit, der Feuchtigkeitsgehalt, die Biegefestigkeit und die Oberflächenrauigkeit oder -festigkeit. Mithilfe der Qualitätskennwerte und dem Verfahren der statistischen Variation der Steuerkriterien können diese selbsttätig optimal eingestellt werden.

Die EP 259 597 B1 betrifft eine Weiterbildung dieses Verfahrens, wobei Wasserdampf mit einer Dampftemperatur verwendet wird, die 5-25°C über der Sintertemperatur des Kunststoffmaterials liegt, und einen vorgegebenen hohen Sättigungsgrad aufweist, sodass die Dampftemperatur etwa 5°C über der Dampfsättigungstemperatur liegt.

Die DE 32 43 632 A1 betrifft ein Verfahren und eine Vorrichtung zur Sinterung von Partikelschaumstoffkörpern. Mit diesem Verfahren sollen unterschiedliche Formlinge aus verschiedenartigen schäumbaren Kunststoffen hergestellt werden können. Da die Materialien in der Anlieferung erheblichen Toleranzen unterliegen und sich z. B. in der Feuchtigkeit und im Treibgasgehalt abhängig vom Vorschäumen und Zwischenlagern unterscheiden, werden aus gemessenen Temperatur- und Druckwerten während der Verarbeitung Kennwerte ermittelt, die zur laufenden Bestimmung von Vorgabewerten bzw. deren Korrektur dienen.

Die DE 42 36 081 A1 betrifft ein weiteres Verfahren zum Herstellen von Formkörpern aus geschäumtem Kunststoff. Bei diesem Verfahren wird eine Form verwendet, deren formhohlraumbildende Wände aus schlecht wärmeleitfähigem Material bestehen oder entsprechend beschichtet sind. Das entsprechende Formwerkzeug kann aus einem Kunststoff ausgebildet sein. Insbesondere ist es ein Kunststoff mit gut wärmeleitenden Partikeln und/oder Fasern, die beispielsweise aus Metall bestehen.

Weiterhin sind Partikelschaumstoffteile auf Basis thermoplastischer expandierbarer-Polyurethane(ETPU) (z. B. WO 94/20568 A) bekannt. Diese Partikelschaumstoffteile werden aus expandierbarem, partikelförmigem, thermoplastischem ETPU hergestellt. Zur Formteilherstellung werden die vorgeschäumten, gegebenenfalls mit einem Gas druckbeladenen ETPU-Partikel in eine Form gegeben und soweit erhitzt, dass die Partikel miteinander verschweißt werden. Das Erhitzen erfolgt durch Beaufschlagung mit Wasserdampf. Wenn nötig, kann vor der Formteilherstellung eine Druckbeladung der Partikel erfolgen. Nach dem Entformen sollte das Formteil bis zur Gewichtskonstanz getempert werden. Die Temperung erfolgt bei Temperaturen von 20-120°C. Die thermoplastischen ETPU-Partikel können mit einem Treibmittel, wie zum Beispiel Butan oder CO₂ versehen sein. Als Treibmittel können auch feste Treibmittel verwendet werden, die beim Erwärmen Gas abspalten, wie Azolcarbonamid oder p-Toluolsulfonsäurehydrazid.

Der Vorteil von Partikelschaumstoffteilen aus Partikeln auf Basis von thermoplastischem Polyurethan (ETPU-Partikel) liegt in der hohen Elastizität im Vergleich zu Partikelschaumstoffteilen auf Basis von anderen Kunststoffen, insbesondere Polystyrol und Polypropylen.

Schaumstoffpartikel auf Basis von Polyurethan besitzen hohe gegenseitige Adhäsionskräfte und eine hohe Elastizität. Dies führt dazu, dass einzelne Schaumstoffpartikel bereits in einer lockeren Schüttung aneinander kleben und verklumpen.

Aus der EP 0 485 714 A1 geht ein Verfahren zum Herstellen von Partikelschaumstoffkörper hervor, bei dem die Strömungsgeschwindigkeit, der Druck und die Tem peratur des Dampfes gemessen und geregelt werden. Hierbei wird die Dampfmasse und der Massenstrom des Dampfes in Zeitabständen berechnet, die kleiner als die Dauer einer Bedampfungsphase und viel kleiner als die Dauer eines Bedampfungsvorganges sind, der für die Herstellung eines Partikelschaumstoffkörpers benötigt wird. Kurzzeitige Schwankung des Druckes und der Temperatur des Dampfes werden erfasst und bei der Berechnung der Dampfmasse und des Massenstroms berücksichtigt.

Der Erfindung liegt die Aufgabe zugrunde, eine Vorrichtung und ein Verfahren zur Herstellung eines Partikelschaumstoffteils aus Schaumstoffpartikel auf Polyurethan basis (eTPU) zu schaffen, mit dem Partikelschaumstoffteile wiederholbar zuverlässig in hoher Qualität herstellbar sind.

Eine weitere Aufgabe, die er Erfindung zugrunde liegt, ist eine Vorrichtung und ein Verfahren zur Herstellung eines Partikelschaumstoffteils aus Schaumstoffpartikel zu schaffen, mit dem großvolumige Partikelschaumstoffteile wiederholbar zuverlässig in hoher Qualität herstellbar sind.

Ein oder mehrere der Aufgaben werden durch das in dem unabhängigen Anspruch definierte Verfahren und die in dem unabhängigen Anspruch definierte Vorrichtung gelöst. Vorteilhafte Ausgestaltungen der Erfindung sind in den jeweiligen Unteransprüchen angegeben.

Ein erfindungsgemäßes Verfahren zur Herstellung eines Partikelschaumstoffteils umfasst folgende Schritte:
- Zuführen von Schaumstoffpartikeln in einen Formteilinnenraum eines Formwerkzeuges,
- thermoplastisches Verschweißen der Schaumstoffpartikel im Formwerkzeug zum Partikelschaumstoffteil unter Zuführung von Wasserdampf. Das Verfahren zeichnet sich dadurch aus, dass der Druck des Wasserdampfes gemäß einem vorbestimmten Profil mit einer Rampe innerhalb eines vorbestimmten Zeitintervalls allmählich von einem Anfangswert auf einen Endwert erhöht wird.

Die Erfinder der vorliegenden Erfindung haben festgestellt, dass manchmal unmittelbar nach dem Zuführen von Wasserdampf in den Formteilinnenraum des Formwerkzeuges Abschnitte der Schaumstoffpartikelfüllung aus eTPU verschweißen und verhauten und so die weitere Strömung des Wasserdampfes bereichsweise unterbinden. Es wird angenommen, dass es aufgrund der hohen Elastizität der Schaumstoffpartikel auf ET-Polyurethanbasis (eTPU) und deren adhäsiver Oberfläche zu lokal verdichteten Abschnitten in der Schaumstoffpartikelfüllung des Formwerkzeuges kommt, die schneller verschweißen und verhauten. Hierdurch werden Partikelschaumstoffteile erzeugt, die bereichsweise unterschiedlich stark verschweißt sind. Dies stellt einen erheblichen Qualitätsmangel dar.

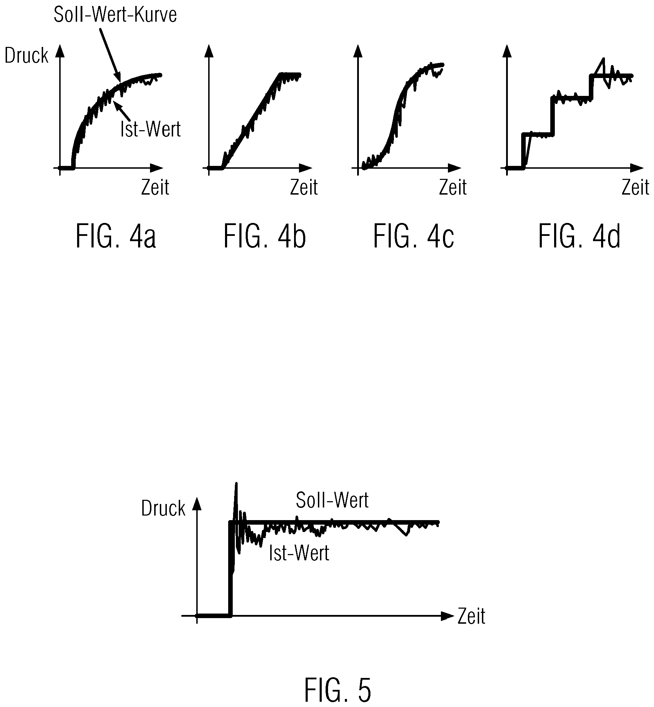

Bei herkömmlichen Verfahren zur Herstellung eines Partikelschaumstoffteils wird der Druck des Wasserdampfes schlagartig von 0 auf einen vorbestimmten Soll-Wert eingestellt. Figur 5 zeigt in einem Diagramm die Vorgabe des Soll-Wertes (dicke Linie) und den tatsächlichen Ist-Wert (dünne Linie). Die schlagartige Erhöhung des Druckes des Wasserdampfes führt zu einer dementsprechend schlagartigen Beaufschlagung der Schaumstoffpartikel im Formwerkzeug. Bei Füllungen des Formwerkzeuges mit ungleicher Dichte werden die unterschiedlich dicht gepackten Bereiche unterschiedlich mit Wasserdampf beaufschlagt. Hierdurch kann es zu lokalen Verschweißungen und Verhautung kommen, die wiederum ein Verschweißen anderer Bereiche verhindern. Weiterhin ist zu berücksichtigen, dass bei einer schlagartigen Beaufschlagung mit Wasserdampf die sich in den Zwischenräumen zwischen den Schaumstoffpartikeln befindende Luft schnell erwärmt. Hierdurch erhöht die Luft ihr Volumen und das Austreiben der Luft aus dem Formwerkzeug verzögert sich. Luft ist zudem im Vergleich zu Wasserdampf ein wesentlich besserer thermischer Isolator, wodurch die mit dem Wasserdampf zugeführte Wärme stark verzögert in die noch mit Luft gefüllten Bereiche der Schaumstoffpartikelfüllung gelangt.

Weiterhin gibt es bei einer schlagartigen Erhöhung des Soll-Wertes oftmals ein Überschwingen des Ist-Wertes (siehe Figur 5), so dass kurzzeitig und vor allem wiederum lokal begrenzt Wasserdampf mit einem überhöhten Druck und damit überhöhter Temperatur vorliegt.

Bei der vorliegenden Erfindung wird hingegen der Druck des Wasserdampfes gemäß einem vorbestimmten Profil geregelt, das eine Rampe aufweist, um innerhalb eines vorbestimmten Zeitintervalls den Druck allmählich von einem Anfangswert auf einen Endwert zu erhöhen. Durch das Vorsehen einer solchen Rampe wird der Wasserdampf zunächst mit geringem Druck zugeführt, der allmählich erhöht wird, wobei sich in den Zwischenräumen zwischen den Schaumstoffpartikeln befindende Luft gleichmäßig verdrängt werden kann.

Der Wasserdampf wird üblicherweise als trockener Sattdampf zugeführt. Die Temperatur des trockenen Sattdampfes ist durch die Siedepunktkurve von Wasserdampf festgelegt und korreliert somit mit dem Druck. Durch den allmählichen Druckanstieg wird auch ein allmählicher Temperaturanstieg des Wasserdampfes bewirkt. An der Werkzeugoberfläche kondensiert ein Teil des Wasserdampfs, so dass aus dem Sattdampf ein Nassdampf wird.

Mit dem erfindungsgemäßen Verfahren kann die Qualität der Partikelschaumstoffteile, insbesondere wenn sie aus Schaumstoffpartikeln auf Basis von Polyurethan bestehen und/oder großvolumige Partikelschaumstoffteile hergestellt werden, erheblich gesteigert werden. Weiterhin können Verfahren, bei welchen die Schaumstoffpartikel durch den Befüllvorgang unter Druck gesetzt werden (Crack-Spaltfüllen, Druckfüllen oder Gegendruckfüllen) zuverlässig mit hoher Qualität hergestellt werden.

Obwohl der Druck des Wasserdampfes nur allmählich erhöht wird, hat sich gezeigt, dass der gesamte Vorgang des Verschweißens der Schaumstoffpartikel nicht länger als bei herkömmlichen Vorrichtungen dauert. In einzelnen Fällen konnte sogar eine Verkürzung der Taktzeit erzielt werden. Dies wird darauf zurückgeführt, dass beim Zuführen des Wasserdampfes mit geringem Druck die sich noch im Formwerkzeug befindliche Luft nicht so schnell erwärmt und dadurch leichter und schneller aus dem Formwerkzeug getrieben werden kann. Weiterhin werden die Schaumstoffpartikel langsam erwärmt, wodurch die Zwickelräume zwischen den Schaumstoffpartikel lange geöffnet bleiben. so dass die Luft und der Dampf gut hindurch strömen kann.

Großvolumige Partikelschaumstoffteile besitzen ein Volumen von zumindest 0,5 m³, insbesondere zumindest 1 m³ und vorzugsweise zumindest 1,5 m³.

Es hat sich auch gezeigt, dass das erfindungsgemäße Verfahren zur Herstellung von Partikelschaumstoffteilen aus anderen Materialien wie Polyurethan, insbesondere aus Polypropylen, Polyethylen und Polystyrol geeignet ist und vor allem bei großvolumigen und/oder durch Crack-Spaltfüllen, Druckfüllen oder Gegendruckfüllen sehr stark mechanisch komprimierten Partikelschaumstoffteilen sehr vorteilhaft ist, da die im Formwerkzeug befindliche Luft schnell entfernt werden kann und zudem ein über das große Volumen gleichmäßige Erwärmung und Verschweißung des Partikelschaumstoffteils stattfindet. Großvolumige Partikelschaumstoffteile besitzen ein Volumen von zumindest 0,5 m³ und insbesondere von zumindest 1 m³. Das bei der Herstellung dieser großvolumigen Partikelschaumstoffteile verwendete Formwerkzeug besitzt im geschlossenen Zustand ein entsprechend großes Volumen.

Die Rampe ist vorzugsweise eine stetig differenzierbare Funktion des Druckes über die Zeit. Dies bedeutet, dass die Rampe keine Stufen oder Zacken enthält, die zu Überschwingen in der Regelung führen können. Bei einer solchen Rampe kann der Ist-Wert sehr genau der Soll-Wert-Kurve folgen. Am Anfangswert und am Endwert ist es nicht unbedingt notwendig, dass die Rampe stetig differenzierbar ausgebildet ist.

Die Rampe ist vorzugsweise derart ausgebildet, dass der Druck des Wasserdampfes mit einer mittleren Rate von 0,01 bar/s bis 2 bar/s verändert wird.

Der Druck des Wasserdampfes wird während der Rampe vorzugsweise mit einer mittleren Rate nicht mehr als 2 bar/s verändert. Insbesondere ist die mittlere Rate nicht größer als 1,5 bar/s bzw. 1 bar/s.

Vorzugsweise ist die mittlere Rate der Rampe größer als 0,02 bar/s, insbesondere größer als 0,04 bar/s. Das Partikelschaumstoffteil wird vorzugsweise aus Schaumstoffpartikeln hergestellt, die ET-PU (Polyurethan), EPS (Polystyrol), EPP (Polypropylen), EPE (Polyethylen) oder E-Copolymere aufweisen oder überwiegend aus einem dieser Materialien bestehen.

Vorzugsweise wird ein Formwerkzeug verwendet, das zwei Formhälften aufweist, wobei eine jede Formhälfte in einer separaten Dampfkammer angeordnet ist. Einer jeden Dampfkammer werden mittels einem, mit der Regeleinrichtung verbundenem Dampfventil Wasserdampf zugeführt. In einer jeden Dampfkammer oder einer entsprechenden Zuführleitung ist jeweils ein Drucksensor angeordnet, der mit der Regeleinrichtung verbunden ist. Ein jede Dampfkammer weist ein Kondensatventil zum Ableiten des Wasserdampfes bzw. des Kondensates aus der Dampfkammer auf. Zunächst wird einer ersten der beiden Formhälften Wasserdampf über die korrespondierende erste Dampfkammer mit dem vorbestimmten Profil zugeführt, wobei in der zweiten Dampfkammer das Kondensatventil geöffnet ist, so dass aus dem Formteilinnenraum verdränge Luft durch die zweite Dampfkammer abströmen kann. Danach wird der zweiten Formhälfte Wasserdampf über die zweite Dampfkammer mit dem vorbestimmten Profil zugeführt, und in der ersten Dampfkammer das Kondensatventil geöffnet, so dass die restliche Luft aus dem Formteilinnenraum verdrängt werden und abströmen kann.

Wasserdampf kann mit dem vorbestimmten Profil dem Formteilinnenraum zum Spülen des Formteilinnenraumes und/oder zum Autoklavieren der im Formteilinnenraum befindlichen Schaumstoffpartikel zugeführt werden. Insbesondere beim Spülen des Formteilinnenraumes ist das Profil mit der Rampe vorteilhaft, da hierbei sehr effizient Luft aus dem Formteilinnenraum verdrängt wird.

Die Rampe ist vorzugsweise eine linear ansteigende Rampe, eine ein- oder mehrfach gekrümmte Rampe, eine stufenförmige, eine parabelförmige oder eine exponentiell ansteigende Rampe.

Die Vorrichtung zur Herstellung eines Partikelschaumstoffteils umfasst:
- ein Formwerkzeug mit einem Formteilinnenraum,
- einen Dampfgenerator zum Erzeugen von in den Formteilinnenraum zuzuführenden Wasserdampf zum thermoplastischen Verschweißen von im Formteilinnenraum befindlichen Schaumstoffpartikel zu einem Partikelschaumstoffteil,
- eine Zuführleitung zum Zuführen des Wasserdampfes zum Formwerkzeug, wobei die Zuführleitung ein ansteuerbares Dampfventil aufweist,
- einen Drucksensor, der im Bereich zwischen dem Dampfventil und dem Formwerkzeug angeordnet ist, um den Druck des Wasserdampfes zu messen.

Die Vorrichtung zeichnet sich dadurch aus, dass eine Regeleinrichtung zum Regeln des Druckes (Regelgröße) nach einem vorbestimmten Profil (Führungsgröße) über die Zeit vorgesehen ist, wobei die Regeleinrichtung mit dem Drucksensor und dem Dampfventil verbunden ist, und das vorbestimmte Profil eine Rampe aufweist, um innerhalb eines vorbestimmten Zeitintervalls den Druck allmählich von einem Anfangswert auf einen Endwert zu erhöhen.

Die Regeleinrichtung ist als P-Regler, PI-Regler, PD-Regler oder als PID-Regler ausgebildet. Es kann auch ein Fuzzy-Regler und/oder ein kaskadierter Regler vorgesehen sein.

Das Formwerkzeug kann von zwei oder mehreren Dampfkammern umschlossen sein, wobei einer jeden Dampfkammer mittels jeweils einem mit der Regeleinrichtung verbundenen Dampfventil Wasserdampf zugeführt werden kann, und in einer jeden Dampfkammer oder in einer entsprechenden Zuführleitung ein Drucksensor angeordnet ist, der mit der Regeleinrichtung verbunden ist, wobei die Regeleinrichtung zum Regeln des Druckes (Regelgröße) in allen Dampfkammern nach einem vorbestimmten Profil (Führungsgröße) über die Zeit ausgebildet ist.

Das Formwerkzeug weist zumindest zwei Formhälften auf, wobei eine jede Formhälfte in einer separaten Dampfkammer angeordnet ist. Weitere Formteile sind z.B. Ziehkerne, für welche jeweils eine separate Dampfkammer vorgesehen wird.

Eine jede Dampfkammer weist vorzugsweise ein von der Regeleinrichtung ansteuerbares Kondensatventil zum Ableiten von Wasserdampf aus der jeweiligen Dampfkammer auf.

Das Formwerkzeug ist mit mehreren Düsen ausgebildet, wobei zumindest eine Düse in eine jede Dampfkammer mündet.

Die Erfindung wird nachfolgend beispielhaft näher anhand der Zeichnungen erläutert. Die Zeichnungen zeigen schematisch vereinfacht in:
- Figur 1: eine Vorrichtung zur Herstellung eines Partikelschaumstoffteils in einem Blockschaltbild,
- Figur 2: einen Schnitt durch zwei ein Formwerkzeug enthaltende Dampfkammern,
- Figur 3: einen Schnitt entlang der Linie A-A in Figur 2,
- Figur 4a-4d: unterschiedliche Rampen in Diagrammen, und
- Figur 5: den Verlauf eines Soll- und Ist-Wertes des Druckes, mit dem der Wasserdampf zugeführt wird, bei einer Vorrichtung nach dem Stand der Technik.

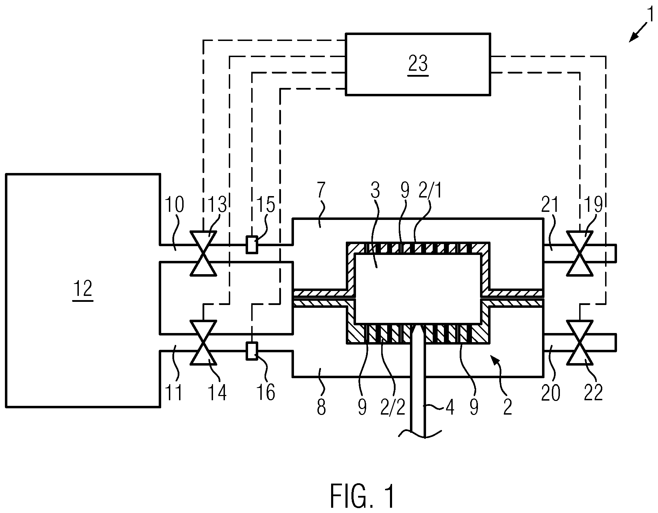

Eine Vorrichtung 1 zur Herstellung eines Partikelschaumstoffteils weist ein Formwerkzeug 2 auf, das aus zwei Formhälften 2/1 und 2/2 ausgebildet ist (Fig. 1). Die Formhälften 2/1, 2/2 enthalten in der Regel eine Positivform und eine Negativform (nicht dargestellt), um dem herzustellenden Partikelschaumstoffteil eine vorbestimmte Form zu verleihen. Durch das Formwerkzeug 2 bzw. der darin befindlichen Positivform und Negativform wird ein Formteilinnenraum 3 begrenzt.

In den Formteilinnenraum 3 mündet ein Füllinjektor 4, durch den aus einem Materialbehälter über eine Leitung Schaumstoffpartikel in den Formteilinnenraum 3 zugeführt werden können. Am Materialbehälter und/oder an der Leitung ist vorzugsweise eine Wasserzuführung oder Wasserdampfzuführung zum Benetzen der zum Formwerkzeug zu fördernden Schaumstoffpartikel vorgesehen. Hierdurch können die Transporteigenschaften der eTPU-Schaumstoffpartikel signifikant verbessert werden und es wird eine verstopfen der Leitung bzw. des Füllinjektors verhindert. Entlang dem Transportweg können auch an mehreren stellen Anschlüsse vorgesehen sein, um Wasser oder Wasserdampf zuzuführen.

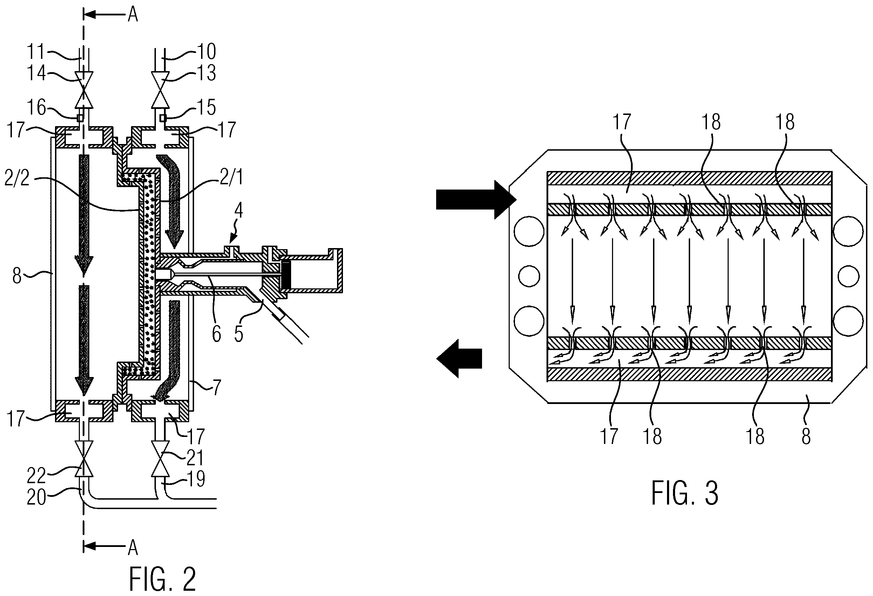

Der Füllinjektor 4 weist einen Anschluss 5 zum Zuführen von Treibluft auf, mit welcher die Schaumstoffpartikel in den Formteilinnenraum befördert werden können (Fig. 2). Eine in den Formteilinnenraum 3 mündende Öffnung des Füllinjektors 4 ist mittels eines Stempels 6 verschließbar.

Die beiden Formhälften 2/1 und 2/2 sind an ihren voneinander abgewandten Seiten jeweils von einer ersten Dampfkammer 7 bzw. zweiten Dampfkammer 8 umschlossen. Die Formhälften 2/1 und 2/2 weisen mehrere Düsen 9 auf, welche aus dem Innenbereich der Dampfkammern 7, 8 in den Formteilinnenraum 3 münden.

Die Formhälften und die entsprechenden Dampfkammern sind mit einem Mechanismus zusammenfahrbar und können zum Öffnen des Formteilinnenraums 3 auseinandergefahren werden.

Das Formwerkzeug 2 kann als sogenanntes Crack-Spaltformwerkzeug ausgeführt sein, das beim Füllen mit Schaumstoffpartikeln nicht vollständig geschlossen wird, sondern erst nach dem Befüllen vollständig geschlossen wird, wobei die Schaumstoffpartikelfüllung im Formteilinnenraum 3 verdichtet wird. Das Formwerkzeug 2 kann jedoch auch für eine sogenannte Druckbeladung vorgesehen sein, bei welcher die Schaumstoffpartikel unter Druck in das Formwerkzeug gefüllt werden, so dass bei einem späteren Herabsetzen des Druckes die Schaumstoffpartikel im Formwerkzeug expandieren.

Eine jede der beiden Dampfkammern 7, 8 ist über jeweils eine Zuführleitung 10, 11 an einen Dampfgenerator 12 angeschlossen. Mit dem Dampfgenerator 12 wird trockener Sattdampf bereitgestellt. Die Zuführleitungen 10, 11 weisen jeweils ein Dampfventil 13, 14 auf, mit welchen die Zufuhr an Wasserdampf in die jeweilige Dampfkammer 7, 8 gesteuert werden kann. Im Bereich zwischen den Dampfventilen 13, 14 und dem Formwerkzeug 2 ist jeweils ein Drucksensor 15, 16 angeordnet. Im vorliegenden Ausführungsbeispiel befinden sich die Drucksensoren in den Zuführleitungen 10, 11. Sie können gleichermaßen in der ersten oder zweiten Dampfkammer 7, 8 angeordnet sein.

In Figur 2 und 3 ist gezeigt, dass die Dampfkammern 7, 8 eingangsseitig und ausgangsseitig jeweils einen Verteilungskanal 17 aufweisen, die sich über die gesamte Länge der jeweiligen Dampfkammern 7, 8 erstrecken und über die Länge gleichmäßig verteilt mehrere Öffnungen 18 aufweisen, so dass der Dampfstrom sich gleichmäßig über die Länge der Dampfkammern 7, 8 verteilt.

Ausgangsseitig münden die Verteilungskanäle 17 jeweils in eine Kondensatleitung 19, 20, in welcher jeweils ein Kondensatventil 21, 22 angeordnet ist.

Die Dampfventile 13, 14, die Drucksensoren 15, 16 und die Kondensatventile 21, 22 sind jeweils mit einer Regeleinrichtung 23 verbunden (Fig. 1).

Nachfolgend wird der Betrieb der Vorrichtung 1 zur Herstellung eines Partikelschaumstoffteils erläutert. Zunächst wird der Formteilinnenraum 3 des Formwerkzeuges 2 über den Füllinjektor 4 mit Schaumstoffpartikel gefüllt. Dies kann mittels des Crack-Spaltverfahrens oder einer Druckbefüllung erfolgen. Nach der Befüllung sind die beiden Formhälften des Formwerkzeuges geschlossen.

Als nächstes werden die Dampfkammern 7, 8 mit Wasserdampf gespült, indem sowohl die Dampfventile 13, 14 als auch gleichzeitig die Kondensatventile 21, 22 geöffnet sind. Hierbei wird in den Dampfkammern 7, 8 befindliche Luft aus den Dampfkammern in die Kondensatleitungen 19, 20 gedrängt.

Nachdem die beiden Dampfkammern 7, 8 mit Wasserdampf gespült sind, werden alle Dampfventile 13, 14 und Kondensatventil 21, 22 geschlossen.

Danach werden das Dampfventil 13 der Zufuhrleitung 10 zur ersten Dampfkammer 7 und das Kondensatventil 22 in der Kondensatleitung 20 der zweiten Dampfkammer 8 geöffnet. Der Wasserdampf strömt somit aus dem Dampfgenerator 12 in die erste Dampfkammer 7, durch die Düsen 9 der ersten Formhälfte 2/1 in den Formteilinnenraum 3 und durch die Düsen 9 der anderen Formhälfte 2/2 in die zweite Dampfkammer 8 und von dort in die Kondensatleitung 20. Der Formteilinnenraum 3 wird hierdurch mit Wasserdampf gespült. Das Öffnen des Dampfventils 13 und des Kondensatventils 21 wird von der Regeleinrichtung 23 derart gesteuert, dass der mit dem Drucksensor 15 in der Zufuhrleitung 10 zur ersten Dampfkammer 7 gemessene Druck einer vorbestimmten Rampe folgt. Hierdurch wird der Druck des Wasserdampfes im Formteilinnenraum 3 allmählich erhöht. Dieses Spülen des Formwekzeuges, wobei der Wasserdampf von einer Dampfkammer in die andere Dampfkammer strömt, wird auch als Querbedampfen bezeichnet. Die Dauer der Querbedampfung und der am Ende der Rampe erreichte Endwert des Druckes werden entsprechend dem Material und der Größe des Partikelschaumstoffteils eingestellt. Typische Endwerte des Druckes für die Querbedampfung betragen für ET-Polystyrol 0,2 bis 0,5 bar, für ET-Polypropylen 2 bis 4 bar und für ET-Polyurethan 1,2 bis 1,8 bar. Bei kleinen Teilen dauert die Querbedampfung etwa 3 bis 5 Sekunden und bei großen Teilen (einige m³) ca. 10 bis 20 Sekunden. Bei einem großen Teil erstreckt sich die Dauer der Rampe auf etwa 10 Sekunden, wohingegen bei einem kleinen Teil die Rampe in etwa 1 bis 2 Sekunden abgefahren wird.

Zur Herstellung eines EPolystyrolblocks mit einem Volumen von ca. 7 m³ sind folgende Parameter geeignet:
Enddruck 0,4 bar;
Die Dauer der Querbedampfung ist 20 s, wovon die Rampe 10 s dauert. Die mittlere Druckänderung während der Rampe beträgt demnach 0,04 bar/s.

Für die Herstellung eines kleinen Teils aus E-Polypropylen (ca. 15 cm³) sind folgende Parameter für die Querbedampfung geeignet:
Enddruck 3 bar
Die Dauer der Querbedampfung ist 3 s, wobei die Rampe 1,5 s dauert. Die mittlere Druckänderung während der Rampe beträgt hierbei 2 bar/s.

Ist die Querbedampfung von der ersten Dampfkammer in Richtung zur zweiten Dampfkammer 8 abgeschlossen, so werden wiederum alle Ventile 13, 14, 21, 22 geschlossen. Danach wird eine zweite Querbedampfung von der zweiten Dampfkammer 8 durch den Formteilinnenraum 3 in die erste Dampfkammer 7 ausgeführt, wobei das Dampfventil 14, mit dem Wasserdampf der zweiten Dampfkammer 8 zugeführt wird, und das Kondensatventil 21 geöffnet werden, mit dem Wasserdampf von der ersten Dampfkammer 7 abgeführt wird. Das Öffnen dieser beiden Ventile 14, 21 wird wiederum von der Regeleinrichtung 23 derart gesteuert, dass der Druck allmählich mit einer vorbestimmten Rampe (Figur 4a-4d) erhöht wird. Bei dieser zweiten Querbedampfung ist der Enddruck in der Regel geringfügig höher als bei der ersten Querbedampfung (ca. 0,1-0,5 bar größer). Dies ist zweckmäßig, da nach der ersten Querbedampfung die Schaumstoffpartikel bereits partiell verschweißt sind, so dass der Strömungswiderstand größer ist.

Vor dem Querbedampfen kann optional eine Zufuhr von Wasserdampf bereits vor oder während des Zusammenfahrens und Verdichtens der Schaumstoffpartikel erfolgen. Der Wasserdampf wird dann bei zunächst geöffnetem Formteilinnenraum (Crack-Spalt) zugeführt, um die in den Zwickelräumen befindliche Luft zu verdrängen. Dieser Bedampfungsschritt wird als Spaltbedampfen bezeichnet.

Als weitere vorteilhafte Bedampfungsvariante hat sich das Bedampfen mit Unterdruck (kleiner 0,5 bar Absolutdruck) im Formwerkzeug herausgestellt. Dazu wird mittels einer zusätzlichen Pumpe (nicht dargestellt) über eine oder beide der Kondensatleitungen 19, 20 Luft aus dem Formwerkzeug 2 abgesaugt. Die reduzierte Luftmenge zwischen den Partikeln sorgt für einen guten Wärmeübergang. Durch das zusätzliche Druckgefälle können auch schon mechanisch komprimierte Schaumstoffpartikel (zum Beispiel durch Crack-Spaltfüllen oder Gegendruckfüllen) vom Dampf durchströmt werden. Aufgrund des herabgesetzten Druckes bleibt die Dampftemperatur niedrig, so dass die Außenhaut des Formteils nicht vorzeitig gasdicht verschweißt wird, bevor die Innenbereiche verschweißt sind.

Figur 4a-4d zeigen unterschiedliche Rampen, mit welchen der Druck zu Beginn der Querbedampfung erhöht werden kann. Die Rampe gemäß Figur 4a ist kreisbogensegmentförmig gekrümmt. Die Rampe gemäß Figur 4b enthält einen linearen Anstieg. Beide Funktionen sind im Bereich der Rampe stetig differenzierbar, d.h., es gibt keine Sprünge und Kanten. Lediglich zu Beginn (Figur 4a, 4b) der Rampe als auch am Ende (Figur 4b) gibt es eine Unstetigkeit in der ersten Ableitung. Eine derart stetig differenzierbare Funktion kann sehr präzise geregelt werden. Dies kann beispielsweise mit einem einfachen Proportionalregler (P-Regler) ausgeführt werden. Vorzugsweise wird jedoch ein proportional-differential-Regler (PD-Regler) und insbesondere ein proportional-differential-integral-Regler (PID-Regler) verwendet.

Die Rampe gemäß Figur 4c weist zwei entgegengesetzte Krümmungen auf, wobei diese Rampe sowohl zu Beginn als auch am Ende der Rampe stetig differenzierbar ist. Dies ist somit eine vollständig glatte Funktion, die sehr genau eingeregelt werden kann.

Figur 4d zeigt eine Rampe mit mehreren Stufen. Eine derartige Regelung ist grundsätzlich auch möglich. Jedoch sind die einzelnen Stufen nicht stetig differenzierbar.

Bei jeder Stufe kann es daher Überschwingungen geben. Da die einzelnen Stufen deutlich geringer als im Stand der Technik sind (vgl. Figur 5), fallen die Überschwingungen entsprechend geringer aus.

All diesen Rampen ist gemeinsam, dass zu Beginn der Wasserdampf mit geringem Druck und damit geringer Temperatur zugeführt wird, was das Durchströmen des Formteilinnenraumes und das Verdrängen von Luft erheblich erleichtert.

Die mittlere Rate, mit welcher während der Rampe der Druck erhöht wird, ist vorzugsweise kleiner als 2 bar/s, insbesondere kleiner als 1,5 bar/s und vorzugsweise kleiner als 1 bar/s.

Nach dem Querbedampfen in beiden Richtungen werden die Kondensatventile 21, 22 geschlossen und die beiden Dampfventile 13, 14 geöffnet bzw. offen gehalten. Hierdurch wird Wasserdampf über beide Formhälften des Formwerkzeuges 2 in den Formteilinnenraum 3 zugeführt, um die darin befindlichen Partikelschaumstoffe vollständig zu verschweißen. Dieser Schritt wird auch als Autoklavieren bezeichnet. Beim Autoklavieren sind die eingestellten Drücke in der Regel höher als beim Querbedampfen. Typische Druckwerte für das Autoklavieren liegen für E-Polystyrol im Bereich von 1-1,2 bar, für E-Polypropylen im Bereich von 3,5-5 bar und für E-Polyurethan im Bereich von 2,2-3,5 bar. Die Dauer des Autoklavier-Schrittes hängt vom Volumen des zu erzeugenden Partikelschaumstoffteils und der Werkzeugmasse ab und kann zwischen einigen wenigen Sekunden und bis zu einer Minute betragen.

Grundsätzlich ist es auch möglich, beim Autoklavieren den Druck zunächst mit einer Rampe zu erhöhen. Da sich jedoch unmittelbar vor dem Autoklavieren keine Luft mehr im Formwerkzeug befinden sollte und zudem die Schaumstoffpartikel durch das Querbedampfen vorerwärmt sind, ist der Effekt der Rampe beim Autoklavieren wesentlich weniger ausgeprägt als beim Querbedampfen.

Bei der oben erläuterten Alternative, dem Spaltbedampfen, also dem Zuführen von Wasserdampf, während die Werkzeugform noch etwas geöffnet ist, macht es sehr viel Sinn, den Druck gemäß einer Rampe ansteigen zu lassen, da in diesem Stadium sich viel Luft im Formteilinnenraum befindet.

Nach dem Autoklavieren wird das hergestellte Partikelschaumstoffteil abgekühlt. Hierbei werden die Werkzeughälften mit Wasser besprüht. Durch Kondensation des in dem Formteilinnenraum befindlichen Wasserdampfes wird sein Volumen reduziert und damit der Druck auf das Partikelschaumstoffteil reduziert. Zusätzlich kann ein Unterdruck bzw. Vakuum angelegt werden, so dass durch die Verdampfung des kondensierten Wassers eine weiterer Kühleffekt bewirkt wird. Danach wird das Formwerkzeug geöffnet und das Partikelschaumstoffteil entnommen.

Das Verfahren zum Herstellen eines Partikelschaumstoffteils kann dann von Neuem beginnen.

Mit dem oben erläuterten Verfahren wird vermieden, dass insbesondere zu Beginn, wenn sich Luft im Formwerkzeug befindet, zu viel Energie auf einmal eingetragen wird, wodurch das Schaumstoffteil verhauten kann, obwohl sich im Innenbereich noch Luft befindet und die Schaumstoffpartikel im Innenbereich noch nicht verschweißt sind. Mit dem Verfahren wird Luft aus den Zwickelräumen sehr effizient verdrängt. Durch die schnelle und gleichmäßige Verteilung von Wasserdampf im Formteilinnenraum wird eine schnelle Wärmeleitung erzielt, wodurch der gesamte Formteilinnenraum im Wesentlichen die gleiche Temperatur einnimmt und gleichmäßig verschweißt wird. Ein partielles Verbrennen, insbesondere an der Oberfläche des Partikelschaumstoffteils kann so zuverlässig vermieden werden. Bei herkömmlichen Verfahren kann bei einer Verhautung der Dampf nicht weiter strömen. Dies ist insbesondere problematisch, wenn in diesem Bereich der Druck und damit die Temperatur ansteigt, so dass die Oberfläche des Partikelschaumstoffteils partiell verbrennt. Da mit der vorliegenden Erfindung der Druck und damit die Temperatur einer definierten Funktion folgen, können diese aus dem Stand der Technik bekannten Probleme nicht entstehen.

### Bezugszeichenliste

- 1: Vorrichtung
- 2: Formwerkzeug
- 3: Formteilinnenraum
- 4: Füllinjektor
- 5: Anschluss
- 6: Stempel
- 7: erste Dampfkammer
- 8: zweite Dampfkammer
- 9: Düse
- 10: Zuführleitung
- 11: Zuführleitung
- 12: Dampfgenerator
- 13: Dampfventil
- 14: Dampfventil
- 15: Drucksensor
- 16: Drucksensor
- 17: Verteilungskanal
- 18: Öffnung
- 19: Kondensatleitung
- 20: Kondensatleitung
- 21: Kondensatventil
- 22: Kondensatventil
- 23: Regeleinrichtung

## Patentansprüche

1. Verfahren zur Herstellung eines Partikelschaumstoffteils umfassend folgende Schritte
- Zuführen von Schaumstoffpartikeln in einen Formteilinnenraum (3) eines Formwerkzeuges (2), wobei Schaumstoffpartikel auf Polyurethanbasis (eTPU) verwendet werden und/oder die Schaumstoffpartikel entweder durch Crack-Spaltfüllen, Druckfüllen oder Gegendruckfüllen in das Formwerkzeug eingebracht werden und/oder ein Formwerkzeug (2) verwendet wird, das im geschlossenen Zustand zumindest ein Volumen von zumindest 0,5 m³ aufweist,
- thermoplastisches Verschweißen der Schaumstoffpartikel im Formwerkzeug (2) zum Partikelschaumstoffteil unter Zuführung von Wasserdampf,
wobei der Druck des Wasserdampfes gemäß einem vorbestimmten Profil mit einer Rampe innerhalb eines vorbestimmten Zeitintervalls allmählich von einem Anfangswert auf einen Endwert erhöht wird.

2. Verfahren nach einem der Ansprüche 1,
**dadurch gekennzeichnet,**
**dass** der Druck des Wasserdampfes während der Rampe mit einer mittleren Rate von 0,01 bar/s bis 2 bar/s verändert wird.

3. Verfahren nach einem der Ansprüche 1 oder 2,
**dadurch gekennzeichnet,**
**dass** ein Formwerkzeug (2) verwendet wird, das zwei Formhälften (2/1, 2/2) aufweist, wobei eine jede Formhälfte (2/1, 2/2) von einer separaten Dampfkammer (7, 8) umschlossen ist, und einer jeden Dampfkammer (7, 8) mittels jeweils einem mit einer Regeleinrichtung (23) verbundenen Dampfventil (13, 14) Wasserdampf zugeführt wird und in einer jeden Dampfkammer (7, 8) oder in einer entsprechenden Zuführleitung ein Drucksensor (15, 16) angeordnet ist, der mit der Regeleinrichtung (23) verbunden ist, und eine jede Dampfkammer (7, 8) ein Kondensatventil (21, 22) zum Ableiten des Wasserdampfes aus der Dampfkammer (7, 8) aufweist, wobei
zunächst einer ersten der beiden Formhälften (2/1) Wasserdampf über die korrespondierende erste Dampfkammer (7) mit dem vorbestimmten Profil zugeführt wird, und an der zweiten Dampfkammer (8) das Kondensatventil (22) geöffnet ist, so dass aus dem Formteilinnenraum (3) verdrängte Luft abströmen kann, und danach der zweiten Formhälfte (2/2) Wasserdampf über die zweite Dampfkammer (8) mit dem vorbestimmten Profil zugeführt wird, und an der ersten Dampfkammer (7) das Kondensatventil (21) geöffnet ist, so dass aus dem Formteilinnenraum (3) verdrängte Luft abströmen kann.

4. Verfahren nach einem der Ansprüche 1 bis 3,
**dadurch gekennzeichnet,**
**dass** zum Spaltbedampfen und/oder zum Spülen und/oder. Querbedampfen des Formteilinnenraumes (3) und/oder zum Autoklavieren der im Formteilinnenraum (3) befindlichen Schaumstoffpartikel dem Formteilinnenraum (3) Wasserdampf zugeführt wird, wobei der Druck des Wasserdampfes dem vorbestimmten Profil folgt.

5. Verfahren nach einem der Ansprüche 1 bis 4,
**dadurch gekennzeichnet,**
**dass** die Rampe eine linear ansteigende Rampe, eine ein- oder mehrfach gekrümmte Rampe, eine stufenförmige, eine parabelförmige oder eine exponentiell ansteigende Rampe ist.

6. Verfahren nach einem der Ansprüche 1 bis 5,
**dadurch gekennzeichnet,**
**dass** die Schaumstoffpartikel in einer Partikelzufürleitung dem Formwerkzeug unter Zugabe von Wasser, oder unter Zugabe von Wasserdampf dem Formwerkzeug zugeführt werden.

7. Vorrichtung zur Herstellung eines Partikelschaumstoffteils, umfassend
- ein Formwerkzeug (2) mit einem Formteilinnenraum (3),
- einen Dampfgenerator (12) zum Erzeugen von in den Formteilinnenraum (3) zuzuführenden Wasserdampf zum thermoplastischen Verschweißen von im Formteilinnenraum (3) befindlichen Schaumstoffpartikel zu einem Partikelschaumstofftei, wobei die Schaumstoffpartikel auf Polyurethanbasis (eTPU) ausgebildet sind,
- eine Zuführleitung (10, 11) zum Zuführen des Wasserdampfes zum Formwerkzeug (2), wobei die Zuführleitung (10, 11) ein ansteuerbares Dampfventil (13, 14) aufweist,
- einen Drucksensor (15, 16), der im Bereich zwischen dem Dampfventil (13, 14) und dem Formwerkzeug (2) angeordnet ist, um den Druck des Wasserdampfes zu messen,
wobei eine Regeleinrichtung (23) zum Regeln des Druckes nach einem vorbestimmten Profil über die Zeit vorgesehen und ausgebildet ist, wobei die Regeleinrichtung (23) mit dem Drucksensor (15, 16) und dem Dampfventil (13, 14) verbunden ist,
**dadurch gekennzeichnet, dass**
das vorbestimmte Profil eine Rampe aufweist, um innerhalb eines vorbestimmten Zeitintervalls den Druck allmählich von einem Anfangswert auf einen Endwert zu erhöhen.

8. Vorrichtung nach Anspruch 7,
**dadurch gekennzeichnet,**
**dass** die Regeleinrichtung (23) ein P-Regler, ein PI-Regler, ein PD-Regler oder ein PID-Regler ist.

9. Vorrichtung nach Anspruch 7 oder 8,
**dadurch gekennzeichnet,**
**dass** die Rampe derart ausgebildet ist, dass der Druck des Wasserdampfes mit einer mittleren Rate von nicht mehr als 2 bar/s verändert wird und/oder dass die Rampe eine stetig differenzierbare Funktion des Druckes über die Zeit ist.

10. Vorrichtung nach einem der Ansprüche 7 bis 9,
**dadurch gekennzeichnet,**
**dass** das Formwerkzeug (2) von einer oder mehreren Dampfkammern (7, 8) umschlossen ist, wobei einer jeden Dampfkammer (7, 8) mittels jeweils einem mit der Regeleinrichtung (23) verbundenen Dampfventil (13, 14) Wasserdampf zugeführt werden kann, und in einer jeden Dampfkammer (7, 8) oder in einer entsprechenden Zuführleitung ein Drucksensor (15, 16) angeordnet ist, der mit der Regeleinrichtung (23) verbunden ist, wobei die Regeleinrichtung (23) zum Regeln des Druckes (Regelgröße) in allen Dampfkammern nach einem vorbestimmten Profil (Führungsgröße) über die Zeit ausgebildet ist.

11. Vorrichtung nach Anspruch 10,
**dadurch gekennzeichnet,**
**dass** das Formwerkzeug (2) zwei Formhälften (2/1, 2/2) aufweist, wobei eine jede Formhälfte (2/1, 2/2) in einer separaten Dampfkammer (7, 8) angeordnet ist.

12. Vorrichtung nach Anspruch 10 oder 11,
**dadurch gekennzeichnet,**
**dass** eine jede Dampfkammer (7, 8) ein von der Regeleinrichtung (23) ansteuerbares Kondensatventil (21, 22) zum Ableiten von Wasserdampf aus der jeweiligen Dampfkammer (7, 8) aufweist.

13. Vorrichtung nach Anspruch 10 oder 12,
**dadurch gekennzeichnet,**
**dass** das Formwerkzeug (2) mehrere Düsen (9) aufweist, wobei zumindest eine Düse (9) in eine jede Dampfkammer (7, 8) mündet.

14. Vorrichtung nach einem der Ansprüche 7 bis 13,
**dadurch gekennzeichnet,**
**dass** eine von einem Materialbehälter zum Formwerkzeug führende Leitung zum Zuführen von Schaumstoffpartikel vorgesehen ist, wobei am Materialbehälter und/oder an der Leitung eine Wasserzuführung oder Wasserdampfzuführung zum Benetzen der zum Formwerkzeug zu fördernden Schaumstoffpartikel vorgesehen ist.

15. Verfahren nach einem der Ansprüche 1 bis 6,
**dadurch gekennzeichnet,**
**dass** eine Vorrichtung nach einem der Ansprüche 7 bis 14 verwendet wird, um ein Partikelschaumstoffteil aus Schaumstoffpartikel auf Polyurethanbasis herzustellen.

## Claims

1. Method for the production of a particle foam part comprising the following steps
- Feeding of foam particles into a mould cavity (3) of a mould (2), wherein polyurethane-based (eTPU) foam particles are used and/or wherein the foam particles are introduced into the mould either by crack split filling, pressure filling or counter-pressure filling and/or wherein a mould (2) is used which, in the closed state, has a volume of at least 0.5 m³
- Thermoplastic welding of the foam particles in the mould (2) to form a particle foam part, under a supply of steam,
wherein the pressure of the steam is increased gradually according to a predetermined profile with a ramp from an initial value to an end value within a predetermined interval of time.

2. Method according to any of claims 1,
**characterised in that**
the pressure of steam during the ramp is varied at a mean rate of 0.01 bar/s to 2 bar/s.

3. Method according to any of claims 1 or 2
**characterised in that**
a mould (2) is used which has two mould halves (2/1, 2/2), with each mould half (2/1, 2/2) being encompassed by a separate steam chamber (7, 8), and with steam being fed into each steam chamber (7, 8) by means of a steam valve (13, 14) connected to a control device (23), and each steam chamber (7, 8) or a corresponding feed pipe is fitted with a pressure sensor (15, 16), which is connected to the control device (23), and each steam chamber (7, 8) has a condensate valve (21, 22) to take steam away from the steam chamber (7, 8), wherein
firstly steam is fed to the first of the two mould halves (2/1) via the corresponding first steam chamber (7) with the predetermined profile, and at the second steam chamber (8) the condensate valve (22) is opened so that air expelled from the mould cavity (3) may flow out and next, steam is fed to the second mould half (2/2) via the second steam chamber (8) with the predetermined profile, and the condensate valve (21) in the first steam chamber (7) is opened so that air expelled from the mould cavity (3) can flow away.

4. Method according to any of claims 1 to 3,
**characterised in that**
for crack steaming and/or for rinsing and/or cross-steaming of the mould cavity (3) and/or for autoclaving of the foam particles present in the mould cavity (3), steam is fed to the mould cavity (3), with the pressure of the steam following the predetermined profile.

5. Method according to any of claims 1 to 4
**characterised in that**
the ramp is a linear rising ramp, a single or multiple curved ramp, a stepped, a parabolic or an exponentially rising ramp.

6. Method according to any of claims 1 to 5
**characterised in that**
the foam particles are fed to the mould in a particle feed pipe with the addition of water, or with the addition of steam.

7. Apparatus for the production of a particle foam part comprising:
- A mould (2) with a mould cavity (3)
- A steam generator (12) to generate steam for feeding into the mould cavity (3) for thermoplastic welding of foam particles present in the mould cavity (3) to form a particle foam part, wherein the foam particles are polyurethane-based (eTPU)
- A feed pipe (10, 11) for feeding steam to the mould (2), wherein the feed pipe (10, 11) has a controllable steam valve (13, 14)
- A pressure sensor (15, 16) located in the area between the steam valve (13, 14) and the mould (2) in order to measure the steam pressure,
wherein a control device (23) is provided and embodied for controlling the pressure according to a predetermined profile over time, wherein the control device (23) is connected to the pressure sensor (15, 16) and the steam valve (13, 14), **characterised in that**
the predetermined profile has a ramp so that, within a predetermined interval of time, pressure may be increased gradually from an initial value to an end value.

8. Apparatus according to claim 7
**characterised in that**
the control device (23) is in the form of a P controller, a PI controller, a PD controller or a PID controller.

9. Apparatus according to claim 7 or 8
**characterised in that**
the ramp is so designed that the pressure of the steam is varied at an average rate of no more than 2 bar/s and/or that the ramp is a continuously differentiable function of pressure over time.

10. Apparatus according to any of claims 7 to 9,
**characterised in that**
the mould (2) is encompassed by two or more steam chambers (7, 8), wherein steam may be fed to each steam chamber (7, 8) by means of a steam valve (13, 14) each, which is connected to the control device (23), and a pressure sensor (15, 16) connected to the control device (23) is provided in each steam chamber (7, 8) or in a corresponding feed pipe, wherein the control device (23) is designed to control pressure (control variable) in all steam chambers according to to a predetermined profile (reference variable) over time.

11. Apparatus according to claim 10
**characterised in that**
the mould (2) has two mould halves (2/1, 2/2), with each mould half (2/1, 2/2) being located in a separate steam chamber (7, 8).

12. Apparatus according to claim 10 or 11,
**characterised in that**
each steam chamber (7, 8) has a condensate valve (21, 22) controllable by the control device (23), for the removal of steam from the respective steam chamber (7, 8).

13. Apparatus according to claim 10 or 12,
**characterised in that**
the mould (2) has several nozzles (9), wherein at least one nozzle (9) leads into each steam chamber (7, 8).

14. Apparatus according to any of claims 7 to 13
**characterised in that**
a pipe for the feeding of foam particles leading from a material container to the mould is provided, wherein at the material container and/or at the pipe a water feed pipe or a steam feed pipe is provided for wetting the foam particles to be conveyed to the mould.

15. Method according to any of claims 1 to 6
**characterised in that**
an apparatus according to any of claims 7 to 14 is used in order to produce a particle foam part from polyurethane-based foam particles.

## Revendications

1. Procédé servant à fabriquer une pièce en mousse de particules, comprenant des étapes suivantes
- d'amenée de particules de mousse dans un espace intérieur de pièce moulée (3) d'un outil de moulage (2), dans lequel des particules de mousse à base de polyuréthane (eTPU) sont utilisées et/ou les particules de mousse sont introduites soit par remplissage de fente par craquage, remplissage sous pression soit par remplissage sous contre-pression dans l'outil de moulage et/ou un outil de moulage (2) est utilisé, qui présente, dans l'état fermé, au moins un volume d'au moins 0,5 m³ ;
- de soudage thermoplastique des particules de mousse dans l'outil de moulage (2) pour obtenir une pièce en mousse de particules en amenant de la vapeur d'eau,
dans lequel la pression de la vapeur d'eau est augmentée selon un profil prédéfini avec une rampe pendant un intervalle de temps prédéfini progressivement depuis une valeur initiale sur une valeur finale.

2. Procédé selon la revendication 1,
**caractérisé en ce**
**que** la pression de la vapeur d'eau est modifiée pendant la rampe à une taux moyenne de 0,01 bar/s à 2 bar/s.

3. Procédé selon l'une quelconque des revendications précédentes 1 ou 2,
**caractérisé en ce qu'**
un outil de moulage (2) est utilisé, lequel présente deux moitiés de moule (2/1, 2/2), dans lequel chaque moitié de moule (2/1, 2/2) est entourée par une chambre à vapeur (7, 8) séparée et de la vapeur d'eau est amenée à chaque chambre à vapeur (7, 8) au moyen de respectivement une soupape à vapeur (13, 14) reliée à un dispositif de régulation (23) et un capteur de pression (15, 16) est disposé dans chaque chambre à vapeur (7, 8) ou dans un conduit d'amenée correspondant, lequel est relié au dispositif de régulation (23), et chaque chambre à vapeur (7, 8) présente une soupape à condensat (21, 22) servant à évacuer la vapeur d'eau hors de la chambre à vapeur (7, 8), dans lequel
de la vapeur d'eau est amenée en premier lieu à une première des deux moitiés de moule (2/1) par l'intermédiaire de la première chambre à vapeur (7) correspondante avec le profil prédéfini, et la soupape à condensat (22) est ouverte au niveau de la deuxième chambre à vapeur (8) de sorte que l'air refoulé hors de l'espace intérieur de pièce moulée (3) peut sortir par écoulement, puis de la vapeur d'eau est amenée à la seconde moitié de moule (2/2) par l'intermédiaire de la deuxième chambre à vapeur (8) avec le profil prédéfini, et la soupape à condensat (21) est ouverte au niveau de la première chambre de pression (7) de telle sorte que de l'air refoulé hors de l'espace intérieur de pièce moulée (3) peut sortir par écoulement.

4. Procédé selon l'une quelconque des revendications 1 à 3,
**caractérisé en ce que**
de la vapeur d'eau est amenée à l'espace intérieur de pièce moulée (3) aux fins de l'évaporation par fente et/ou du rinçage et/ou de l'évaporation transversale de l'espace intérieur de pièce moulée (3) et/ou pour l'autoclavage les particules de mousse se trouvant dans l'espace intérieur de pièce moulée (3), dans lequel la pression de la vapeur d'eau suit le profil prédéfini.

5. Dispositif selon l'une quelconque des revendications 1 à 4,
**caractérisé en ce que**
la rampe est une rampe ascendante de manière linéaire, une rampe à incurvation unique ou à incurvations multiples, une rampe en forme de palier, une rampe de forme parabolique ou une rampe ascendante de manière exponentielle.

6. Procédé selon l'une quelconque des revendications 1 à 5,
**caractérisé en ce que**
les particules de mousse sont amenées dans un conduit d'amenée de particules à l'outil de moulage en ajoutant de l'eau ou sont amenés à l'outil de moulage en ajoutant de la vapeur d'eau.

7. Dispositif servant à fabriquer une pièce en mousse de particules, comprenant :
- un outil de moulage (2) avec un espace intérieur de pièce moulée (3),
- un générateur de vapeur (12) servant à générer de la vapeur d'eau à amener dans l'espace intérieur de pièce moulée (3) pour souder de manière thermoplastique des particules de mousse se trouvant dans l'espace intérieur de pièce moulée (3) pour former une pièce en mousse de particules, dans lequel les particules de mousse sont formées à base de polyuréthane (eTPU),
- un conduit d'amenée (10, 11) servant à amener la vapeur d'eau vers l'outil de moulage (2), dans lequel le conduit d'amenée (10, 11) présente une soupape à vapeur (13, 14) pouvant être pilotée,
- un capteur de pression (15, 16), qui est disposé dans la zone entre la soupape à vapeur (13, 14) et l'outil de moulage (2) afin de mesurer la pression de la vapeur d'eau, dans lequel un dispositif de régulation (23) est prévu et configuré pour réguler la pression selon un profil prédéfini sur le temps, dans lequel le dispositif de régulation (23) est relié au capteur de pression (15, 16) et à la soupape à vapeur (13, 14),
**caractérisé en ce que**
le profil prédéfini présente une rampe pour augmenter à l'intérieur d'un intervalle de temps prédéfini la pression progressivement depuis une valeur initiale sur une valeur finale.

8. Dispositif selon la revendication 7,
**caractérisé en ce que**
le dispositif de régulation (23) est un régulateur P, un régulateur PI, un régulateur PD ou un régulateur PID.

9. Dispositif selon la revendication 7 ou 8,
**caractérisé en ce que**
la rampe est réalisée de telle manière que la pression de la vapeur d'eau est modifiée à une vitesse moyenne inférieure à 2 bar/sec., et/ou que la rampe est une fonction pouvant être différenciée en permanence de la pression sur le temps.

10. Dispositif selon l'une quelconque des revendications 7 à 9,
**caractérisé en ce que**
l'outil de moulage (2) est entouré par une ou plusieurs chambres à vapeur (7, 8), dans lequel de la vapeur d'eau peut être amenée à chaque chambre à vapeur (7, 8) au moyen de respectivement une soupape à vapeur (13, 14) reliée au dispositif de régulation (23), et un capteur de pression (15, 16) est disposé dans chaque chambre à vapeur (7, 8) ou dans un conduit d'amenée correspondant, lequel est relié au dispositif de régulation (23), dans lequel le dispositif de régulation (23) est réalisé pour réguler la pression (grandeur de régulation) dans toutes les chambres à vapeur selon un profil prédéfini (grandeur de référence) sur le temps.

11. Dispositif selon la revendication 10,
**caractérisé en ce que**
l'outil de moulage (2) présente deux moitiés de moule (2/1, 2/2), dans lequel chaque moitié de moule (2/1, 2/2) est disposée dans une chambre à vapeur (7, 8) séparée.

12. Dispositif selon la revendication 10 ou 11,
**caractérisé en ce que**
chaque chambre à vapeur (7, 8) présente une soupape à condensat (21, 22) pouvant être pilotée par le dispositif de régulation (23), servant à évacuer de la vapeur d'eau hors de la chambre à vapeur (7, 8) respective.

13. Dispositif selon la revendication 10 ou 12,
**caractérisé en ce que**
l'outil de moulage (2) présente plusieurs buses (9), dans lequel au moins une buse (9) débouche dans chaque chambre à vapeur (7, 8).

14. Dispositif selon l'une quelconque des revendications 7 à 13,
**caractérisé en ce qu'**
un conduit menant depuis un contenant de matériau vers l'outil de moulage est prévu pour amener des particules de mousse, dans lequel une arrivée d'eau ou une arrivée de vapeur d'eau servant à humidifier les particules de mousse à convoyer vers l'outil de moulage est prévue au niveau du contenant de matériau et/ou au niveau du conduit.

15. Procédé selon l'une quelconque des revendications 1 à 6,
**caractérisé en ce qu'**
un dispositif selon l'une quelconque des revendications 7 à 14 est utilisé afin de fabriquer une pièce en mousse de particules composée de particules de mousse à base de polyuréthane.
